Europäisches Patentamt

European Patent Office

Office européen des brevets

(19)

(11) **EP 0 707 842 A1**

(12) **EUROPEAN PATENT APPLICATION**

(43) Date of publication:
24.04.1996 Bulletin 1996/17

(51) Int. Cl.⁶: **A61G 5/04**, B62D 51/00, B62D 51/04

(21) Application number: 94307591.1

(22) Date of filing: 17.10.1994

(84) Designated Contracting States:
AT BE CH DE DK FR GB IT LI NL SE

(71) Applicant: NABCO LIMITED
Kobe 651 (JP)

(72) Inventor: Fujigaki, Motoharu
Suma-ku Kobe (JP)

(74) Representative: Lerwill, John et al
A.A. Thornton & Co.
Northumberland House
303-306 High Holborn
London, WC1V 7LE (GB)

(54) **Motor driven vehicle**

(57) A motor-driven wheelchair includes a chair body, a pair of drive wheels mounted on the chair body, and a pair of motors for driving said drive wheels to rotate. By operating the motors, the wheelchair can be moved. The wheelchair further includes a pair of manual driving-force sensing means, which senses manual driving-forces exerted by a man to the motor-driven wheelchair along each side of the chair body to move the wheelchair by man power. The sensing means generates electrical signals corresponding to the respective manual driving-forces. Control means is provided to individually control the velocities of the respective motors in accordance with the respective electrical signals.

F I G . I

**Description**

This invention relates generally to a motor-driven vehicle, such as a motor-driven wheelchair, and, more particularly, to such a vehicle which can be driven not only by means of an electric motor but also by a helper.

BACKGROUND OF THE INVENTION

A motor-driven wheelchair includes a chair-like body on which a user is seated. The body is provided with a pair of drive wheels and a pair of followers. The drive wheels are coupled to respective motors, and the speed and direction of the rotation of the motors are control led by the user by means of a control lever on a control unit connected to an arm rest of the body. By operating the control lever, the user can move the wheelchair back and forth as he desires. The motors are driven from a chargeable battery on the body. In the rear portion of the wheelchair, handgrips are provided, by which a helper can move the wheelchair back and forth. An example of such motor-driven wheelchair is described in Unexamined Japanese Utility Model Publication No. SHO 58-97903.

Usually, the motors are coupled via respective gear transmissions with clutches to the drive wheels. When the helper wants to move the wheelchair by his or her own power, the helper can use the clutches to disengage the drive wheels from the motors so that the helper can move the wheelchair relatively easily.

The sum of the weight of such a wheelchair and the weight of a user of the wheelchair may sometimes be one-hundred-odd kilograms. In such a case, a helper can move the wheelchair only on a horizontal, flat path. In some cases, for example, when the helper must push the wheelchair with the user seated thereon up a slope, the helper may have to use the motors to drive the wheelchair, so that the battery power is consumed much. As a result, the battery needs frequent charging.

Japanese Unexamined Patent Publication No. HEI 3-15468 discloses another type of wheelchair. The wheelchair disclosed in this publication includes a pair of drive wheels mounted to a wheelchair body, and motors for driving the respective drive wheels. The motors are also mounted to the body. Each of the drive wheels is coupled to a manually driven ring which may be rotated by a user to drive the drive wheel, with torque sensing means for sensing manually applied torque disposed between each of the drive wheels and each of the manually driven ring. Each of the torque sensing means includes a torsion bar disposed between the shaft for the associated drive wheel and the shaft for the associated manually driven ring. A strain gage is provided on each torsion bar for sensing the torsion thereof caused when the ring is manually driven to rotate. The output of the strain gage is applied to a torque sensor to determine the magnitude of the manually applied driving torque exerted to each manually driven ring. A control unit controls the respective motors in accordance with the determined driving torques exerted onto the respective manually driven rings. A switch is provided for supplying power to the motors. By placing this switch in an OFF position, the motor-driven wheelchair can be driven by man power.

In order to move the wheelchair of this publication by means of the motors, a user must manually impart driving torques to the manually driven rings. If no torque is given, the motors will not operate. Therefore, if the user cannot use his or her hands to manually drive the rings, the wheelchair cannot move. Sometimes, for such a user, a helper may accompany him or her, but, unless the helper drives the manually driven rings, he cannot take advantage of the motor power. Then, he must switch off the power supply for the motors. Even in such a case, however, more power must be used than required for driving an ordinary man-power wheelchair, because of the added weight of the motors mounted on the wheelchair.

In addition, according to the disclosure of this publication, the torque sensing means requires torsion bars interposed between the shafts for the manually driven rings and the drive wheels, the structure become complicated.

An object of the present invention is to provide a motor-driven vehicle, such as a motor-driven wheelchair, in which battery power consumed for driving motors is reduced by taking advantage of manual driving-force given by a person, such as a helper, other than a user of the wheelchair. In this specification, the term "manual driving-force" means force exerted to a wheelchair by a helper accompanying the wheelchair through a handle (e.g. a handlebar and handgrips) of the wheelchair.

Another object of the present invention is to provide a motor-driven vehicle with a simplified arrangement for sensing the manual driving-force given to the vehicle.

Other objects and features of the present invention will become clear from the following description of the invention.

SUMMARY OF THE INVENTION

A motor-driven vehicle embodying a first aspect to the present invention includes a chair body, a drive wheel mounted on the body, and a motor for driving the wheel to rotate so that the wheelchair can be moved by the motor-power. The motor-driven vehicle can be driven also by man power. The vehicle is provided with manual driving-force exerting means by which a man can exert a manual driving-force to the vehicle, and manual driving-force sensing means for sensing the manual driving-force exerted to the vehicle and for producing an electrical signal in accordance with the magnitude of the sensed manual driving-force. The vehicle further includes control means for controlling the motor in response to the electrical signal.

The manual driving-force exerting means may be a handle, such as a handlebar and handgrips, provided on the chair body. The manual driving-force sensing means may be a load cell mounted on the handle. The manual driving-force sensing means may comprise an elastic member forming part of the handle, and strain gages mounted on or embedded in the elastic members.

Each of the drive wheels includes a fixed shaft extending from the chair body, a center member fixed to the fixed shaft, and a tire which can rotate around the center member. The manual driving-force sensing means may be mounted on the fixed shaft.

A motor-driven wheelchair embodying a second aspect of the present invention includes a chair body, manual driving-force exerting means for exerting manual driving-forces to the wheelchair in the directions along the two opposite sides of the chair body for moving the wheelchair, drive wheels mounted to the chair body on the respective sides of the chair body, and a pair of motors provided for the respective drive wheels for driving the respective drive wheels to rotate.

The motor-driven wheelchair can be driven by man power. A pair of manual driving-force sensing means are provided on the motor-driven wheelchair for sensing the magnitudes of the manual driving-forces, and for producing electrical signals in accordance with the magnitudes of the respective manual driving-forces. Control means is provided for receiving the respective electrical signals and for controlling the respective motors which drive the associated ones of said drive wheels on the respective sides of the chair body in accordance with the associated electrical signals.

A pair of such control means may be provided for the respective ones of the combinations of the motor and the manual driving-force sensing means. Each of the control means may be disposed in the drive wheel.

The manual driving-force exerting means may be a pair of handgrips mounted to the chair body on the opposite sides thereof. The manual driving-force sensing means may be a load cell disposed in or on each of the handgrips. Alternatively, the manual driving-force sensing means may comprise an elastic member forming part of each handgrip and a strain gage mounted on or embedded in the elastic member.

Each of the drive wheels includes a fixed shaft extending from the chair body, a center member fixed to the fixed shaft, and a tire which can rotate around the center member. The manual driving-force sensing means may be a strain gage mounted on each of the fixed shafts.

## BRIEF DESCRIPTION OF THE DRAWINGS

FIGURE 1 is a perspective view of a motor-driven wheelchair embodying the present invention;

FIGURE 2 is an exploded view of a part of the the wheelchair shown in FIGURE 1;

FIGURE 3 is a block diagram of a control section of the wheelchair shown in FIGURE 1;

FIGURE 4a shows a relationship between an electrical signal from one of load cells and an associated motor-torque related signal in the wheelchair shown in FIGURE 1;

FIGURE 4b shows a relationship between the electrical signal shown in FIGURE 4a and an acceleration of the wheelchair shown in FIGURE 1;

FIGURES 5a and 5b show a relationship between the velocity of the wheelchair shown in FIGURE 1 and the manual driving-force exerted to the wheelchair, in which FIGURE 5a shows an example of change in velocity with time, and FIGURE 5b shows the manual driving-force exerted to the wheelchair;

FIGURE 6 is a flow chart showing the arithmetic processing by a CPU in a signal converting unit of the wheelchair shown in FIGURE 1;

FIGURE 7a shows a longitudinal cross-section of a handgrip of another example of a motor-driven wheelchair embodying the present invention, FIGURE 7b shows a corresponding cross-section of the handgrip of FIGURE 7a with a force manually exerted to it in a direction indicated by an arrow A, and FIGURE 7c shows a corresponding cross-section of the handgrip of FIGURE 7a with force manually exerted to it in a direction indicated by an arrow B;

FIGURE 8 is a cross-sectional view of one of drive wheels of a motor-driven wheelchair according to another embodiment of the present invention; and

## DETAILED DESCRIPTION OF PREFERRED EMBODIMENTS

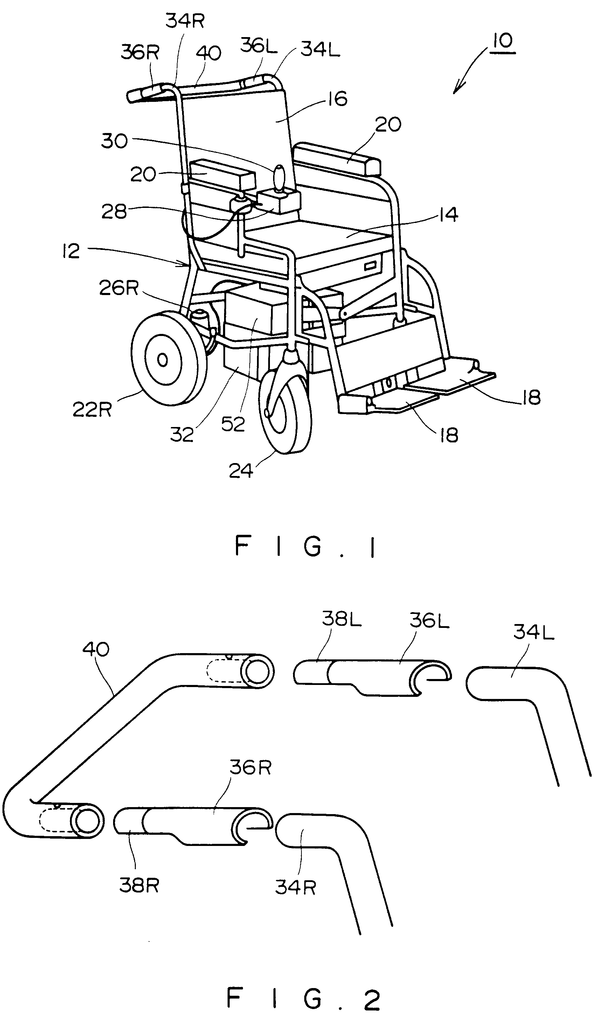

In FIGURE 1, a motor-driven wheelchair according to a first embodiment of the present invention is shown generally by a reference numeral 10. As shown in FIGURE 1, the wheelchair 10 includes a chair body 12 which is formed of, for example, a pipe frame structure and includes a seat 14, a back 16, foot rests 18, and arm rests 20.

A pair of right and left drive wheels 22R and 22L are mounted on the chair body 12 in its lower back portions on the opposite sides thereof. (In FIGURE 1, the left drive wheel 22L is not shown. ) In the front lower portions on the right and left sides of the chair body 12, a pair of followers 24R and 24L are mounted to the chair body 12. (The left side follower 24L is not shown in FIGURE 1.) The drive wheels 22R and 22L are coupled to respective motors, such as geared DC motors, 26R and 26L (the motor 26L being not shown) via respective gear transmissions (not shown). The speed and direction of rotation of the DC motors 26R and 26L are controlled by means of a control lever 30 provided on a control panel 28 mounted to the chair body 12 near one arm rest 20. A chargeable battery 32, such as an automobile lead-acid battery, is disposed beneath the seat 14. The DC motors 26R and 26L are driven from the power supplied by the battery 32.

Handgrips 34R and 34L extend rearward from the upper ends of pipes extending upward along the right and left sides of the back 16. As shown in greater detail in FIGURE 2, couplers 36R and 36L are detachably coupled to the handgrips 34R and 34L. Manual driving-force sensing means, such as load cells 38R and 38L, are mounted at the ends of the couplers 36R and 36L remote from the handgrips 34R and 34L. The load cells 38R and 38L sense pushing and pulling forces manually exerted thereto. A U-shaped handlebar 40 may be connected to the load cells 38R and 38L at its respective ends.

The motor-driven wheelchair can be driven also by man power. A helper may push or pull the wheelchair by the handlebar 40. A pushing or pulling force applied along each side of the wheelchair 10 is exerted to each of the load cells 38R and 38L, which, in turn, generate analog electrical signals f1R and f1L in accordance with the magnitudes and directions of the manual driving-forces exerted along the right and left sides of the wheelchair 10, respectively. For example, when a helper pushes the wheelchair forward (i.e. in the positive (+) direction), the load cells 38R and 38L generate electrical signals f1R and f1L, respectively, which are positive and have respective magnitudes proportional to the magnitudes of the forces exerted to the load cells 38R and 38L. On the other hand, when the wheelchair 10 is pulled backward (i.e. in the negative (-) direction), the load cells 38R and 38L generate signals f1R and f1L which are negative and have respective magnitudes proportional to the magnitudes of the forces exerted thereto.

When the helper exerts such forces to the handlebar 40 as to turn right or left the wheelchair 10 or to rotate counterclockwise or clockwise, a component of the manual driving-force acting on the wheelchair 10 and tending to move it forward, or a component of the force tending to move the wheelchair 10 backward is exerted to a respective one of the load cells 38 and 38L so that electrical signals f1R and f1L corresponding to the respective components are generated.

Thus, the manual driving-forces exerted to the wheelchair 10 can be sensed by a simple structure including the load cells 38R and 38L respectively disposed between the handlebar 40 and the handgrips 34R and 34L.

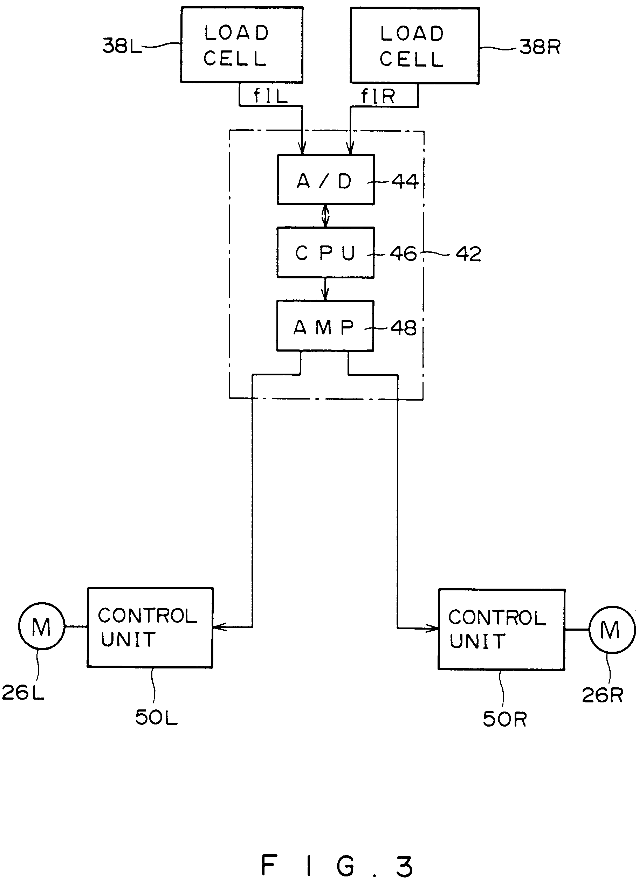

As shown in FIGURE 3, analog electrical signals f1R and f1L generated by the load cells 38R and 38L, respectively, are converted into digital signals in an analog-digital (A/D) converter 44 of a signal converting unit 42, which includes, in addition to the A/D converter 44, a CPU 46 and an amplifier 48. The digital signals are then applied to the CPU 46 for arithmetic operation. The CPU 46 generates digital motor-torque related signals f2R and f2L in accordance with the results of the arithmetic operation carried out in the CPU 46. The digital motor-torque related signals f2R and f2L are amplified by the amplifier 48 and, then, applied to control units 50R and 50L which control the motors 26R and 26L, respectively.

The signal converting unit 42 and the control units 50R and 50L may be placed, for example, within a box 52 disposed on the lead-acid battery 32 (FIGURE 1). Alternatively, only the signal converting unit 42 may be placed in the box 52, while the control units 50R and 50L may be mounted near the drive wheels 22R and 22L, respectively. Since it is not relevant to the subject of the present invention where the signal converting unit 42 and the control units 50R and 50L are placed, not further description about it is necessary.

The A/D converter 44 alternately selects the analog signals f1R and f1L from the load cells 38R and 38L in response to a control signal applied thereto from the CPU 46, and converts the selected analog signal into a digital signal which is applied to the CPU 46.

The amplifier 48 is responsive to a control signal applied thereto from the CPU 46 for applying, in an alternating manner, the amplified digital motor-torque related signals f2R and f2L to the control units 50R and 50L, respectively.

Each control unit 50R (50L) modulates the pulse width of the voltage applied to its associated DC motor 26R (26L) for varying the value of the current supplied to the motor 26R (26L), which results in change of the torque of the motor 26R (26L). Thus, the speed and direction of rotation of the motor 26R (26L) can be changed.

When the digital motor-torque related signals f2R and f2L are positive, the acceleration to drive forward the wheelchair 10 is related to the values of the positive digital motor-torque related signals f2R and f2L, and when the digital motor-torque related signals f2R and f2L are negative, the acceleration to drive backward the wheelchair 10 is related to the values of the negative digital motor-torque related signals f2R and f2L.

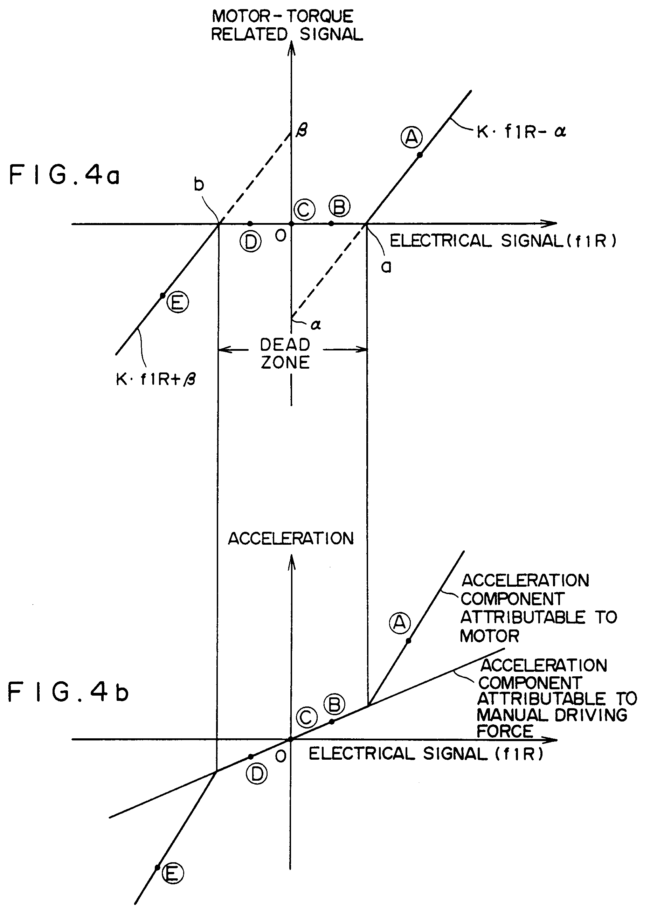

The relationship between the digital motor-torque related signal f2R and the analog electrical signal f1R is shown in FIGURE 4a. The relationship between the analog electrical signal f1R and the acceleration of the wheelchair 10 is shown in FIGURE 4b. As is seen from FIGURE 4a, a region in which the analog electrical signal f1R has a value between a and b is a dead zone, in which the motor-torque related signal f2R remains 0. With the analog electrical signal f1R being greater than a, the digital motor-torque related signal f2R is expressed as $K \cdot f1R - \alpha$ and is proportional to the analog electrical signal f1R. When the analog signal f1R is less than b, the digital motor-torque related signal f2R is proportional to the analog electrical signal f1R, but it is expressed as $K \cdot f1R + \beta$. K is a coefficient, and $\alpha$ and $\beta$ are constants.

For example, when the value of the analog electrical signal f1R is at a point C in FIGURE 4a, which means that the manual driving-force exerted to the load cell 38R is 0, the motor-torque related signal f2R is also 0 and, therefore, as shown in FIGURE 4b, the acceleration is also 0. When the analog electrical signal f1R is at a point B within the dead zone, the motor-torque related signal remains 0, but the acceleration increases by an amount corresponding to the force applied by the helper. At a point A where the analog electrical signal f1R is greater than a, acceleration is given by the motor 26R, so that the sum of the acceleration due to the motor 26R and the acceleration due to the force given by the helper is applied to the wheelchair. The points A and B are exemplified for explanation of acceleration of the wheelchair 10. Exemplified points D and E are for explanation of deceleration of the wheelchair 10. The motor-torque related signal f2R and the acceleration both exhibit a point-symmetry with the point C being the point of symmetry.

Specifically, at the point A or E, the acceleration of the motor-driven wheelchair 10 is the sum of the acceleration given by the force applied by the helper and the acceleration given by the motor 26R so that the torque of the motor 26R varies with the magnitude of the force the helper exerts to the load cell 38R.

The analog electrical signal f1L and the motor-torque related signal f2L are related to each in a similar manner. Thus, the acceleration of the motor 26R is controlled in accordance with the manual driving-force as sensed by the load cell 38R, and the acceleration of the motor 26L is controlled in accordance with the manual driving-force as sensed by the load cell 38L.

FIGURES 4a and 4b show the respective relationships when the wheelchair 10 is on a horizontal flat road. When the wheelchair is driven up and down a slope, the accelerations of the respective motors 26R and 26L vary depending on the magnitude of the manual driving-force the helper gives against the gravitational acceleration.

The dead zone is provided for preventing the motors 26R and 26L from responding to a small manual driving-force to thereby prevent unstable motion of the wheelchair 10. The coefficient K, the constants $\alpha$ and $\beta$, and the values a and b defining the dead zone can be determined to provide a desired acceleration corresponding to a manual driving-force.

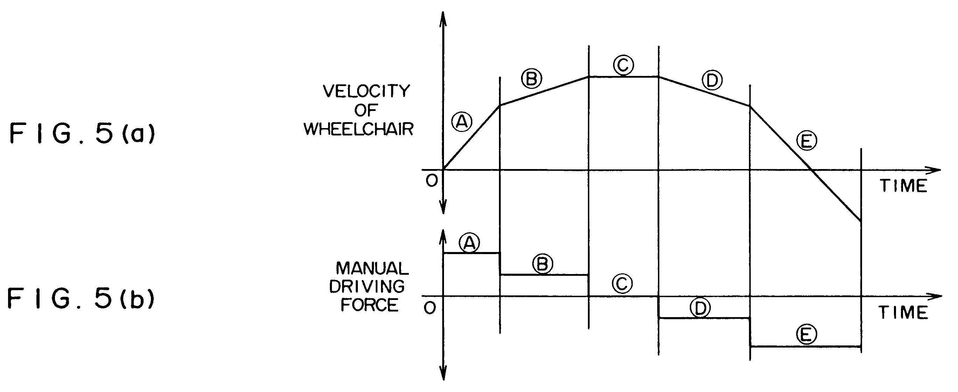

Since it is not that the motors 26R and 26L are driven independent of the manual driving-force given by a helper, but they are driven in relation to the manual driving-force given by the helper, the wheelchair 10 can be driven as if it were driven only by man power. This is explained with reference to FIGURES 5(a) and 5(b).

FIGURE 5(a) shows variations with time in velocity of the wheelchair 10, and FIGURE 5(b) shows the manual driving-force exerted to the load cells 38R and 38L which cause the variations in velocity of the wheelchair 10 shown in FIGURE 5(a), assuming the the manual driving-forces exerted to the load cells are equal to each other. When the manual driving-force is positive (+) (i.e. it acts in the direction to move forward the wheelchair 10) and its absolute value is large as in a region A in FIGURE 5(b), the advancing velocity increases at a high rate as shown in a region A in FIGURE 5(a). When the manual driving-force is positive and its absolute value is small as in a region B (FIGURE 5(b)), the rate of increase of the wheelchair advancing velocity is gradual as shown in FIGURE 5(a). When the manual driving-force applied is zero as in a region C in FIGURE 5(b), the velocity of the wheelchair 10 does not change and the wheelchair moves forward by inertia as shown in FIGURE 5(a) in a region C.

When the manual driving-force is negative (-) (i.e. it acts in the direction to move the wheelchair 10 backward) and its absolute value is small as in a region D in FIGURE 5(b), the advancing velocity of the wheelchair 10 decreases gradually, as in a region D in FIGURE 5(a). If the manual driving-force is negative and its absolute value is large as in a region E, the velocity decreases rapidly. It should be noted that FIGURES 5(a) and 5(b) represent an ideal condition in which there is no friction loss.

In the above description, simple acceleration and deceleration of the wheelchair 10 are described. It should be note that since the motors 26R and 26L are driven independently of each other in response to manual driving-forces acting on the respective load cells 38R and 38L, the wheelchair 10 can change its direction. The direction changing operation of the wheelchair 10 is now described with reference to the following TABLE.

TABLE

| Case | Manual Driving Forces | | Movement of Wheelchair |
|------|------|------|------|
| | Left | Right | |
| 1 | 0 | 0 | Steady Movement |
| 2 | (+) Small | (+) Small | Small Acceleration |
| 3 | (+) Large | (+) Large | Large Acceleration |
| 4 | (-) Small | (-) Small | Small Deceleration |
| 5 | (-) Large | (-) Large | Large Deceleration |
| 6 | (+) Small | (+) Large | Turning Left |
| 7 | (-) Small | (+) Large | Rapidly Turning Left |
| 8 | (-) Large | (+) Large | Rotating Counterclockwise |
| 9 | (+) Large | (+) Small | Turning Right |
| 10 | (+) Large | (-) Small | Rapidly Turning Right |
| 11 | (+) Large | (-) Large | Rotating Clockwise |

In Cases 1 through 5 in the TABLE, the manual driving-forces acting on the load cells 38R and 38L are equal to each other. Case 1 corresponds to the region C in FIGURE 5(a), Case 2 corresponds to the region B, Case 3 corresponds to the region A, Case 4 corresponds to the region D, and Case 5 corresponds to the region E of FIGURE 5(a). In each of Cases 2-5, the magnitude of the manual driving-forces are sufficient to develop the electrical signals f1R and f1L which are outside the dead zone shown in FIGURES 4(a) and 4(b).

In each of Cases 6 through 11, the manual driving-forces acting on the respective load cells 38R and 38L differ from each other. In these cases, the motors 26R and 26L help the wheelchair 10 change its direction of movement.

In Case 6, the manual driving-force acting on the load cell 38L is in the positive direction and the absolute value of the magnitude is small, while the manual driving-force acting on the load cell 38L is also in the positive direction, but the absolute value of the magnitude is larger. In this case, the acceleration provided by the motor 26L and the acceleration provided by the manual driving-force the helper exerts to the wheelchair 10 are summed. However, since the manual driving-force is not large, the acceleration given to the drive wheel 22L is not large. With the manual driving-force acting on the load cell 38R being positive and large in absolute value, the sum of the acceleration due to the manual driving-force given by the helper and the acceleration due to the motor 26R is given to the drive wheel 22R. Thus, the acceleration occurring to the drive wheel 22L and the acceleration occurring to the drive wheel 22R are in the same direction, but the magnitude of the acceleration of the drive wheel 22L is smaller. Accordingly, the wheelchair 10 turns left.

In Case 7, the manual driving-force applied to the load cell 36L is negative and its absolute value is small, while the manual driving-force applied to the load cell 36R is positive and its absolute value is large. In this case, the acceleration of the drive wheel 22R is similar to that in Case 5. However, the acceleration of the drive wheel 22L is in the opposite direction to that in Case 5. Accordingly, the wheelchair 10 turns left rapidly.

In Case 8 where the manual driving-force acting on the load cell 38L is negative and large in negative value, while the manual driving-force acting on the load cell 38R is positive and large in absolute value, the acceleration of the drive wheel 22R is similar to that in Case 6 and the acceleration of the wheel 22L is in the opposite direction to that in Case 6 and large. Accordingly, the wheelchair 10 rotates counterclockwise.

In Case 9, the manual driving-force acting on the load cell 38L is positive and large in absolute value, whereas the manual driving-force acting on the load cell 38R is negative and small in absolute value. This situation is opposite to Case 5, and, therefore, the wheelchair 10 turns right.

When the manual driving-force acting on the load cell 38L is positive and large in absolute value, while the manual driving-force acting on the load cell 38R is negative and small in absolute value, as in Case 10, the wheelchair 10 turns right rapidly, which is opposite to Case 7.

In Case 11, the manual driving-force acting on the load cell 38L is positive and its absolute value is large, whereas the manual driving-force acting on the load cell 38R is negative and large in absolute value. This is a case opposite to Case 8, so that the wheelchair rotates clockwise.

As described above, the accelerations of the motors 26R and 26L respectively coupled to the drive wheels 22R and 22L vary in accordance with the manual driving-forces acting on the load cells 38R and 38L, respectively.

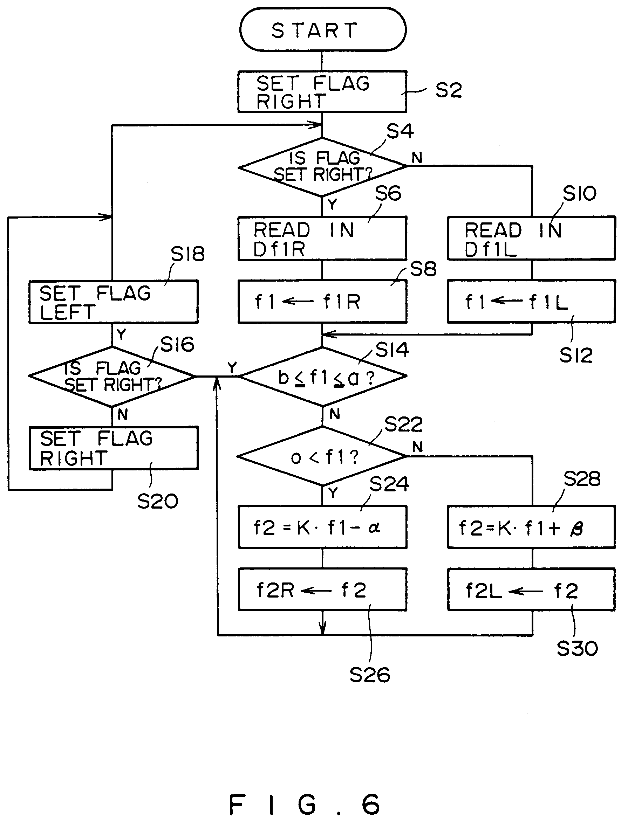

In order to control the acceleration and direction of motion of the wheelchair 10 as described, the CPU 46 in the signal converting unit 42 performs arithmetic operations as shown in the flow chart of FIGURE 6. When the arithmetic operations are carried out, the control lever 30 of the control panel 28 is in its neutral position.

Immediately after the start of the arithmetic operation, a flag indicating which signal is processed, a signal from the right-hand side load cell 38R or a signal from the left-hand side load cell 38L, is set to, for example, RIGHT, which means that the signal from the load cell 38R is to be processed (STEP S2). Next, whether the flag is set to RIGHT or LEFT is determined (STEP S4). If the flag is set to RIGHT (i.e. the judgment made by STEP S4 is YES), a digital signal Df1R which is a digitized version of an analog electrical signal f1R from the load cell 38R is read into the CPU 46 from the A/D converter 44 (STEP S6), and is stored therein as data f1 for use in the succeeding arithmetic operations (STEP S8).

If it is determined in STEP S4 that the flag is set to LEFT (i.e. the judgment made in STEP S4 is NO), which means that the signal from the load cell 38L is to be processed, a digital signal Df1L which is a digitized version of an analog electrical signal f1L from the load cell 38L is read into the CPU 46 from the A/D converter 44 (STEP S10), and is stored therein as data f1 for use in the succeeding arithmetic operations (STEP S12).

After the step S8 or S12, judgment is made as to if the data f1 is equal to or larger than the value b defining the lower limit of the dead zone (FIGURE 4(a)) and equal to or less than the value a defining the upper limit of the dead zone (STEP S14). If the answer is YES, which means that the data f1 is within the dead zone, no acceleration is given to the wheelchair by the motor 26R or 26L.

Next, in order to process a signal from the other load cell, judgment is made as to whether the flag is set RIGHT or not (STEP S16). If the answer is YES, the flag is set to LEFT in order to next process the signal from the left-hand side load cell 38L (STEP S18), and the processing returns to STEP S4.

If the judgment in STEP S14 is NO, which means that the data f1 is outside the dead zone, acceleration is to be given to the wheelchair by the motor 26R or 26L. For that purpose, first, judgment is made as to whether the data f1 is larger than 0 (STEP S22). If the data f1 is larger than 0, an operation $f2 = K \cdot f1 - \alpha$ is carried out, as will be understood from FIGURE 4(a) (STEP S24). The amplifier 48 is controlled so that the result of the arithmetic operation, i.e. data f2, is developed as the motor-torque related signal f2R (STEP S26).

On the other hand, if the data f1 is judged to be less than 0 in STEP S22, an arithmetic operation $f2 = K \cdot f1 + \beta$ is performed (STEP S28), and the amplifier 48 is controlled so that the result of the arithmetic operation, i.e. data f2, is outputted as the motor-torque related signal f2L (STEP S30).

Following STEP S26 or S30, STEPS S16 and S18 or STEPS S16 and S20 are successively performed, and thereafter, STEP S4 is performed, in order to process the signal from the other load cell.

In the manner as stated above, the digital electrical signals Df1R and Df1L are alternately read into the CPU 46, and the motors 26R and 26L are controlled to produce acceleration corresponding to the signals f1R and f1L, respectively.

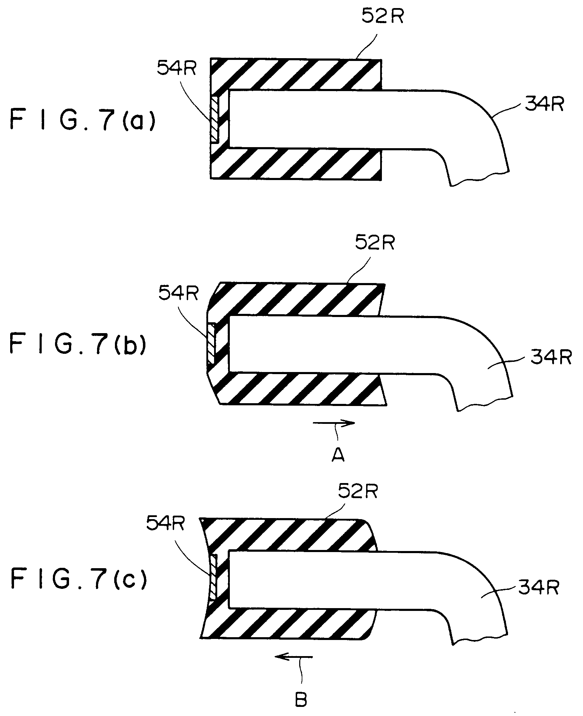

A motor-driven wheelchair according to a second embodiment of the present invention is constructed similar to the wheelchair 10 of the first embodiment, except that, as shown in FIGURES 7(a), 7(b) and 7(c), only strain gages 54R and 54L are mounted as the manual driving-force sensing means. Therefore the same references are used for portions equivalent to those of the motor-driven wheelchair 10, and no further explanation of them is made. (The strain gage 54L is not shown in FIGURES 7(a), 7(b) and 7(c).)

As shown, at the end of one handgrip 34R, an elastic material, such as rubber, is disposed to surround the end of the handgrip 34R to provide an elastic grip 52R. A strain gage 54R is mounted in the end surface of the elastic grip 52R. Similarly, an elastic grip 52L (not shown) is provided at the end of the other handgrip 34L, and another strain gage 54L is mounted on or embedded in the end surface of the elastic grip 52L (not shown).

As shown in FIGURE 7(a), when no manual driving-force is acting on the grip 52R or 52L, it is not deformed at all.

When forces are applied to the wheelchair by the grips 52R and 52L to move the wheelchair forward, the grips 52R and 52L are deformed in the direction indicated by an arrow A in FIGURE 7(b) so that expanding force is exerted onto each of the strain gages 54R and 54L.

On the other hand, if the manual driving-forces to move the wheelchair backward are applied to the the elastic grips 52R and 52L, the grips 52R and 52L are deformed in the direction as indicated by an arrow B in FIGURE 7(c), and compressing force is exerted onto each of the strain gages 54R and 54L.

As described above, the manual driving-forces exerted by the helper to the motor-driven wheelchair 10 in the respective directions along the right and left sides of the wheelchair 10 can be sensed by means of the analog electrical signals generated by the respective strain gages 54R and 54L.

A manual driving-force sensing circuit may comprise a bridge circuit including the strain gages 54R and 54L arranged in such a configuration that when an expanding force is exerted to the strain gage 54R, 54L, a positive (+) analog electrical signal may be generated, whereas a compressing force exerted to the strain gage 54R, 54L may generate a negative (-) analog electrical signal. With this manual driving-force sensing circuit, the motors 26R and 25L can be controlled in accordance with the magnitudes of the manual driving-forces exerted to the wheelchair. Because the strain gages 54R and 54L are placed in the handgrips 52R and 52L, respectively, to which the helper exerts the manual driving-forces directly, the exact manual driving-forces can be sensed.

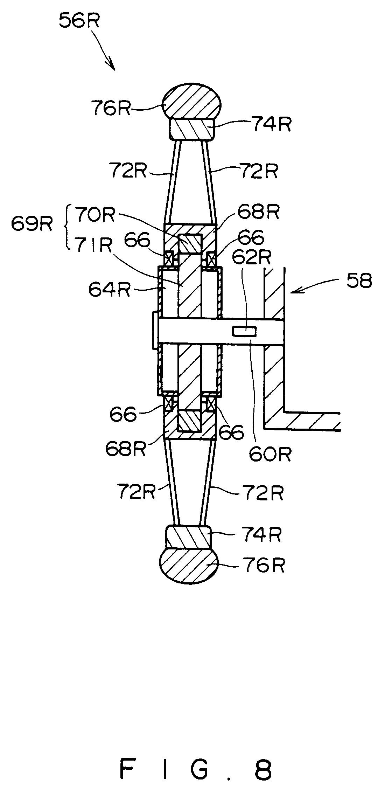

A motor-driven wheelchair according to a third embodiment of the present invention includes a drive wheel arrangement shown in FIGURE 8. A strain gage 62R functioning as manual driving-force sensing means is mounted on a fixed shaft 60R coupling a right-hand side drive wheel 56R to a chair body 58.

A similar strain gage 62L is also mounted on a fixed shaft 60L for the left-hand side drive wheel 56L. Since the drive wheel arrangements for the both drive wheels are the same, only that of the right drive wheel 56R is described.

The fixed shaft 60R extends outward from the right side of the chair body 58, in the direction substantially perpendicular to the direction of a manual driving-force exerted to the chair body 58 to move it forward or backward. A center member 64R having, for example, a disc-shape is connected to the fixed shaft 60R, and a hub 68R is rotatably mounted around the center member 64R with a plurality of bearings 66 disposed between them. The hub 68R is coupled to a rotor 70R of an outer-rotor type DC motor 69R. The DC motor 69R includes a stator 71R which is fixedly mounted to the center member 64, and the outer rotor 70R is in slidable contact with the stator 71R. The arrangement of an outer-rotor of this type is disclosed in greater detail in, for example, Japanese Unexamined Utility Model Publication No. HEI 1-172826, and, therefore, for further details of the arrangement of the DC motor 69R, reference should be made to this publication.

The hub 68R is coupled to an annular rim 74R through a plurality of radially extending spokes 72R. A tire 76R is fitted over the rim 74R. The drive wheels 56R and 56L are substantially larger in diameter than the drive wheels 22R and 22L shown in FIGURE 1.

This drive wheel arrangement is such that the tire 76R is rotated by driving the hub 68R to rotate by means of the outer-rotor DC motor 69R, and, therefore, the center member 64R does not rotate. The center member 64R houses therein a converting unit and a control unit equivalent respectively to the converting unit 42 and the control unit 52R shown in FIGURE 3, and batteries (not shown) for driving the converting and control units and the motor 69R. When the converting unit is placed in one center member, no converting member is need be housed in the other center member.

The strain gages 62R and 62L are mounted longitudinally along the length of the fixed shafts 60R and 60L. When a helper pushes or pulls the wheelchair by means of a handlebar or handgrips to thereby exert manual driving-forces to the wheelchair in the directions along the opposite sides thereof, the manual driving-forces are transmitted via the chair body 58 and the respective fixed shafts 56R to the strain gages 60R and 60L in the directions perpendicular to the plane of the sheet of FIGURE 8 Accordingly, compression or expansion forces corresponding to the exerted manual driving-forces act on the respective strain gages 60R and 60L. A manual driving-force sensing circuit including a bridge circuit comprising the strain gage 68R (68L) can be used to generate an analog electrical signal similar to the analog electrical signal f1R (f1L) generated by the load cell 38R (38L) of the first embodiment, which is proportional to the compression or expansion force acting on the strain gage. This analog electrical signals are used to control the respective DC motors.

With the battery and the control unit etc. housed in each of the center members as stated above, the number of required wires is reduced, so that the wheelchair is suitable for mass-product ion with a reduced number of assembling steps. In the embodiment shown in FIGURE 8, only one strain gage (62R or 62L) is shown, but two or more strain gages may be arranged on the shaft 60 along its length. Further, in addition to the strain gage(s) 62R (62L), another strain gage(s) may be disposed on the opposite sides of the fixed shaft 60R (60L).

According to this embodiment, since the strain gages 62R and 62L are mounted directly on the fixed shafts 60R and 60L, respectively, no torsion bars are required, which simplifies the structure.

In the described embodiments, the drive wheels comprise a pair of rear wheels. However, the rear wheels may be followers with one drive wheel disposed between the two rear wheels, which drive wheel is driven in accordance with the magnitude of the manual driving force exerted to the motor-driving wheelchair.

## Claims

1. A motor-driven vehicle including a body, a drive wheel mounted on the vehicle body, and a motor for driving the drive wheel to rotate, said vehicle capable of being moved by means of said motor, characterized by:

   manual driving-force exerting means mounted on said vehicle body, by which a man can exert manual driving-force to said vehicle body to move said vehicle;

   manual driving-force sensing means mounted on said motor-driving vehicle for sensing said manual-driving force and producing an electrical signal having a magnitude in accordance with the sensed manual driving-force; and

   control means for controlling said motor in accordance with said electrical signal.

2. The motor-driven vehicle according to Claim 1 wherein said manual driving-force exerting means comprises a handle mounted on said vehicle body, and said manual driving-force sensing means comprises a load cell mounted on said handle.

**3.** The motor-driven vehicle according to Claim 1 wherein said manual driving-force exerting means comprises a handle mounted on said vehicle body, and said manual driving-force sensing means comprises an elastic member forming part of said handle and a strain gage mounted on said elastic member.

**4.** The motor-driven vehicle according to Claim 1 wherein each of said drive wheels comprises a fixed shaft extending outward of said vehicle body, a center member fixedly mounted on said fixed shaft, and a tire rotatable around said center member; and said manual driving-force sensing means is mounted on said fixed shaft.

**5.** A motor-driven wheelchair including a chair body, manual driving-force exerting means mounted to said chair body, by which manual driving-forces can be externally exerted to said chair body in directions along opposite sides of said chair body for moving said chair, a pair of drive wheels mounted on said chair body on opposite sides thereof, and a pair of motors each for one of said drive wheels for driving said drive wheels to rotate, characterized by:

a pair of manual driving-force sensing means mounted on said motor-driven wheelchair to sense said respective manual driving-forces, said sensing means producing electrical signals in accordance with said respective manual driving-forces; and

control means for receiving said respective electrical signals for controlling one of said motors driving one of said drive wheels on one side of said wheelchair in accordance with the electrical signal corresponding to said manual driving-force exerted to said chair body along said one side thereof, and controlling the other one of said motors driving the other of said drive wheels on the other side of said wheelchair in accordance with the electrical signal corresponding to said manual driving-force exerted to said chair body along said other side thereof.

**6.** The motor-driven wheelchair according to Claim 5 wherein said control means is provided one for each combination of one of said motors and one of said manual driving-force sensing means.

**7.** The motor-driven wheelchair according to Claim 6 wherein each of said control means is disposed within an associated one of said drive wheels.

**8.** The motor-driven wheelchair according to Claim 5 wherein said manual driving-force exerting means comprises a pair of handgrips disposed on the respective sides of said chair body, and said manual driving-force sensing means comprises load cells mounted on said respective handgrips.

**9.** The motor-driven wheelchair according to Claim 5 wherein said manual driving-force exerting means comprises a pair of handgrips disposed on the respective sides of said chair body, and said manual driving-force sensing means comprises an elastic member forming part of each of said handgrips and a strain gage embedded in each of said elastic members.

**10.** The motor-driven wheelchair according to Claim 5 wherein each of said drive wheels comprises a fixed shaft extending outward from said chair body, a center member fixed to said fixed shaft, and a tire rotating around said center member; said manual driving-force sensing means comprises a strain gage mounted on each of said fixed shafts.

F I G . 1

F I G . 2

F I G . 3

EP 0 707 842 A1

FIG.4a

MOTOR-TORQUE RELATED SIGNAL

K·f1R-α

ELECTRICAL SIGNAL (f1R)

DEAD ZONE

K·f1R+β

FIG.4b

ACCELERATION

ACCELERATION COMPONENT ATTRIBUTABLE TO MOTOR

ACCELERATION COMPONENT ATTRIBUTABLE TO MANUAL DRIVING FORCE

ELECTRICAL SIGNAL (f1R)

EP 0 707 842 A1

F I G. 5 (a)

F I G. 5 (b)

VELOCITY
OF
WHEELCHAIR

MANUAL
DRIVING
FORCE

TIME

TIME

13

EP 0 707 842 A1

F I G . 6

14

FIG.7(a)

52R

54R

34R

FIG.7(b)

52R

54R

34R

A

FIG.7(c)

52R

54R

34R

B

F I G . 8

European Patent
Office

**EUROPEAN SEARCH REPORT**

Application Number

EP 94 30 7591

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | ANNUAL INTERNATIONAL CONFERENCE OF THE IEEE ENGINEERING IN MEDICINE AND BIOLOGY SOCIETY, vol.13, no.4, 1991 pages 1863 - 1864, XP000348194 ABEL ET AL. 'An evaluation of different designs of providing powered propulsion for attendant propelled wheelchairs' * page 1864; figure 3 * | 1-3,5,6, 8,9 | A61G5/04 B62D51/00 B62D51/04 |
| X | EP-A-0 173 393 (UNILEVER NV) * page 4, line 1 - line 17; figures * | 1-3 | |
| E | DE-U-93 11 075 (STROHMAN) * the whole document * | 1-3 | |
| A | DE-A-41 39 533 (KERCMAR) * the whole document * | 1,5 | |
| A | FR-A-2 325 030 (JOHANSSON) * claim 1; figures * | 4,7,10 | TECHNICAL FIELDS SEARCHED (Int.Cl.6) |
| A | EP-A-0 463 168 (MOTOR WHEEL OVERSEAS LIMITED) * abstract; figures * | 4,7,10 | A61G B62D |
| A | US-A-5 234 066 (AHSING ET AL.) | | |

The present search report has been drawn up for all claims

| Place of search | Date of completion of the search | Examiner |
|---|---|---|
| THE HAGUE | 16 March 1995 | Godot, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)